# EUROPEAN PATENT APPLICATION

(11) **EP 4 706 488 A1**
(43) Date of publication of application: **11.03.2026**
(21) Application number: 24223565.3
(22) Date of filing: 27.12.2024
(51) Int. Cl.: A47L 11/40

(54) **CLEANING ROBOT**

(30) Priority: 10.09.2024 CN 202411263747; 11.11.2024 CN 202411600524
(71) Applicant: Lu, Yuancong, Zhuhai, Guangdong 519000 (CN)
(72) Inventor: Lu, Yuancong, Zhuhai, Guangdong 519000 (CN)
(74) Representative: Bayramoglu et al.

(57) **Abstract**

Disclosed is a cleaning robot, including a body and cliff sensors. The cliff sensors are arranged on a side wall of the body along a walking route in the front, on the left and on the right, and the cliff sensors are arranged to be inclined downwards and outwards, and are capable of transmitting detection signals in an inclined and outward manner. The cliff sensors are arranged on the side wall of the body, thereby improving a detection range. The cliff sensors detect based on the working principle of TOF laser ranging in a more accurate and reliable manner, and are capable of detecting cliffs, steps, obstacles and the like, and achieving various detection functions, such that types, quantities and costs of sensors can be reduced.

## Description

### TECHNICAL FIELD

The present invention relates to the technical field of cleaning equipment, and in particular to a cleaning robot.

### BACKGROUND

A cleaning robot in the prior art is provided with cliff sensors to prevent it falling from a high platform, and the cliff sensors are usually arranged on a bottom surface of a body, such that a detection distance and range are limited, and a cliff cannot be detected in a timely manner.

Moreover, most cliff sensors are general infrared sensors, which emit laser beams to irradiate a target object, and detect reflected laser signals to calculate a distance from the target object. However, reflected light beams are easily affected by surface color, material, roughness and so on of the target object. When signals of the reflected light beams are weak, calculation errors easily occur, thereby affecting detection results.

### SUMMARY

An objective of the present invention is to provide a cleaning robot. Cliff sensors are arranged on a side wall of a body, thereby improving a detection range. The cliff sensors detect based on the working principle of time of flight (TOF) laser ranging in a more accurate and reliable manner.

In order to achieve the above objective, the present invention adopts a technical solution as follows:
A cleaning robot, including a body and cliff sensors;
the cliff sensors are arranged on a side wall of the body along a walking route in the front, on the left and on the right;
the cliff sensors are arranged to be inclined downwards and outwards, and are capable of transmitting detection signals in an inclined and outward manner; and
an inclination angle of the cliff sensors ranges between 20° and 70°.

In some embodiments, when an edge-detecting distance between the body and a cliff is less than a preset value, the robot executes an action to avoid the cliff; and
the preset value ranges from 1 cm to 20 cm.

In some embodiments, the cliff sensors are arranged at a top of the side wall.

In some embodiments, the cliff sensors are embedded into the top of the side wall.

In some embodiments, grooves are formed at a front end and on a left side and a right side of the side wall, and the cliff sensors are assembled in the grooves.

In some embodiments, each of the grooves is provided with a first groove surface and a second groove surface;
the first groove surface is arranged to be inclined downwards and outwards;
the second groove surface is arranged to be inclined upwards and outwards; and
the cliff sensor is assembled on the first groove surface.

In some embodiments, the cliff sensors are TOF laser ranging sensors.

In some embodiments, each of the cliff sensors includes a transmitting unit and a receiving unit, where the receiving unit is provided with a light filter.

In some embodiments, the cliff sensors are capable of detecting steps and obstacles.

The present invention has the following beneficial effects: the cliff sensors are arranged on the side wall of the body, thereby improving the detection range, and the cliff sensors detect based on the working principle of TOF laser ranging in a more accurate and reliable manner, which apply to various scenarios.

### BRIEF DESCRIPTION OF THE DRAWINGS

FIG. 1 is a structural diagram of a cleaning robot of the present invention.
FIG. 2 is a top view of a cleaning robot of the present invention.
FIG. 3 is a partial sectional view of a cleaning robot of the present invention.
FIG. 4 is a schematic diagram I of edge detection by a cleaning robot of the present invention.
FIG. 5 is a schematic diagram II of edge detection by a cleaning robot of the present invention.
FIG. 6 is a schematic diagram III of edge detection by a cleaning robot of the present invention.
FIG. 7 is a structural diagram of a cliff sensor of the present invention.
FIGs. 8-12 are also schematic diagrams of edge detection by a cleaning robot of the present invention.

In the figures: 1-body; 10-side wall; 11-groove; 11a-first groove surface; 11b-second groove surface; 2-cliff sensor; 21-transmitting unit; 22-receiving unit; and 23-processing chip.

### DETAILED DESCRIPTION OF THE EMBODIMENTS

The present invention will be further described in detail below with reference to the accompanying drawings.

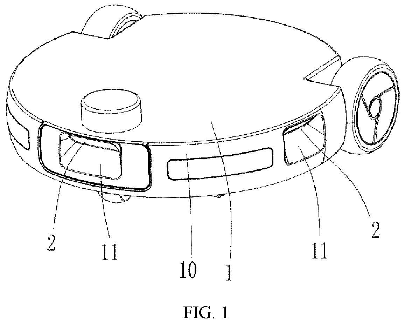

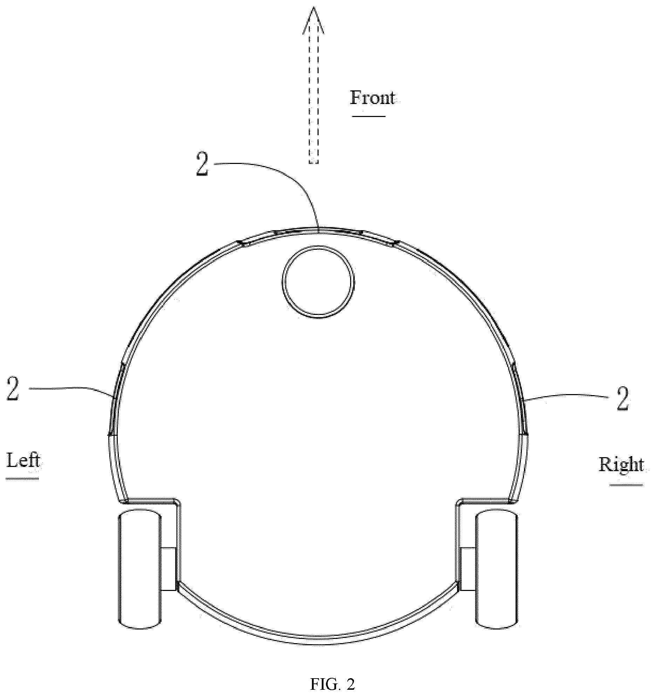

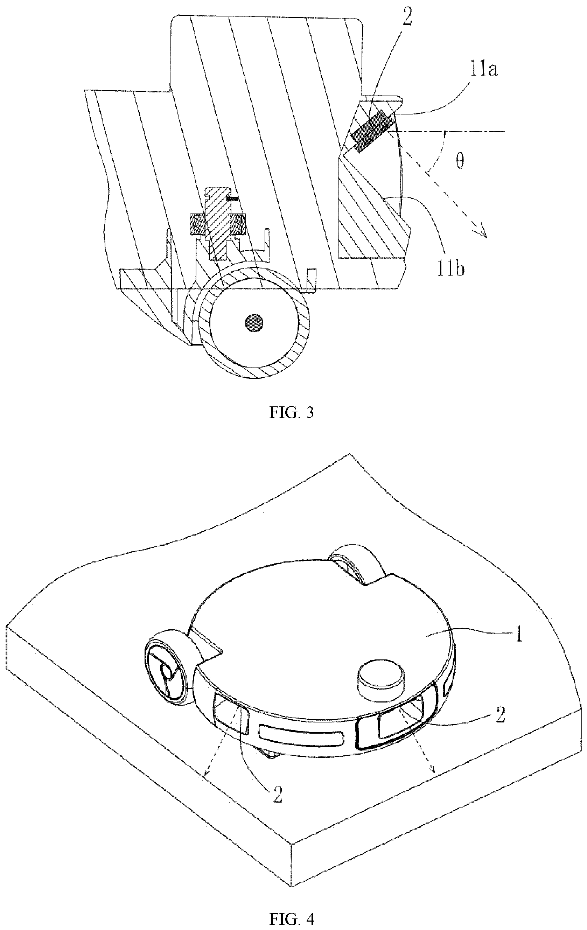

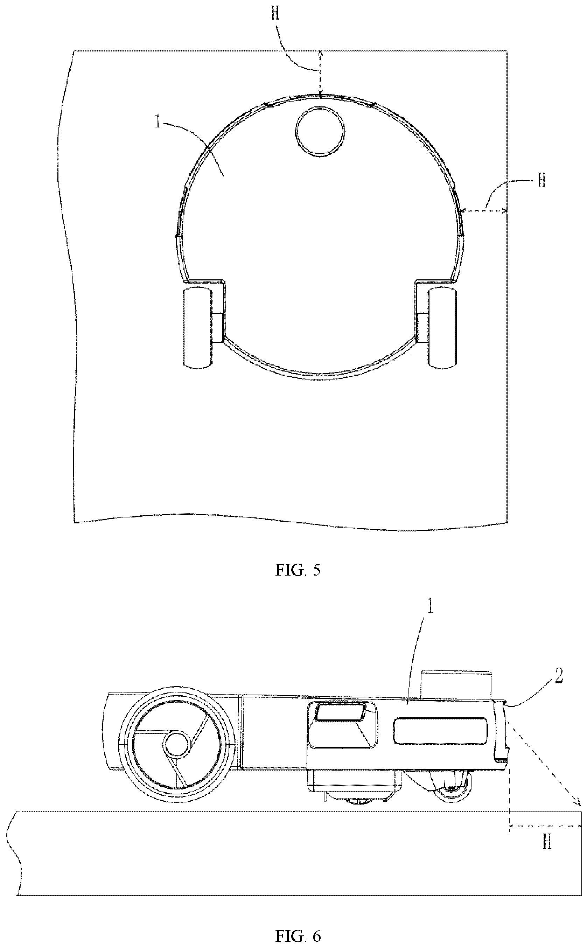

With reference to FIGs. 1-7, a cleaning robot includes a body 1 and cliff sensors 2;
a walking mechanism, a cleaning mechanism, a sterilization and mite removal mechanism and the like are arranged at a bottom of the body 1;
with reference to FIG. 2, the cliff sensors 2 are arranged on a side wall 10 of the body 1 along a walking route in the front, on the left and on the right, that is, the cliff sensors 2 are arranged at a front end and on a left side and a right side of the body 1, and the number of the cliff sensors 2 arranged is at least three;
with reference to FIG. 3, the cliff sensors 2 are arranged to be inclined downwards and outwards, and are capable of transmitting detection signals in an inclined and outward manner; and
an inclination angle θ of the cliff sensors 2 ranges between 20° and 70°, e.g., θ can be set as 20°, 30°, 40°, 45°, 50°, 60°, 70°and the like.

Thus, the cliff sensors 2 are arranged on the side wall 10 of the body 1 and detect in an inclined manner, such that detection is possible in a wider range and more stable and accurate.

With reference to FIGs. 4-6, when an edge-detecting distance H between the body 1 and a cliff is less than a preset value, the robot executes an action to avoid the cliff;
the edge-detecting distance H refers to a horizontal distance between the body 1 and the cliff, and the action to avoid the cliff can be stopping, u-turn, corner turning or the like, which will change or re-plan the walking route to prevent falling; and
the preset value ranges from 1 cm to 20 cm, e.g., H can be set as 1 cm, 2 cm, 3 cm, 4 cm, 5 cm, 8 cm, 10 cm, 15 cm, 20 cm or the like.

In this way, the cliff sensors 2 determine the edge-detecting distance H between the body 1 and a cliff through detection, and when the edge-detecting distance H is less than the preset value, a corresponding action is executed to prevent falling. Moreover, the cliff sensors 2 are arranged on the side wall 10 of the body 1, the detection range is wider, and the preset value of the edge-detecting distance H can be flexibly set, such that the robot applies to different application scenarios through proper setting, thereby enhancing applicability.

The cliff sensors 2 are arranged at a top of the side wall 10, which helps to improve the detection range and accuracy. Preferably, the cliff sensors 2 can be embedded into the top of the side wall 10, to enhance aesthetics of the body 1.

Specifically, with reference to FIG. 3, grooves 11 are formed at a front end and on a left side and a right side of the side wall 10, and the cliff sensors 2 are assembled in the grooves 11.

Each of the grooves 11 is provided with a first groove surface 11a and a second groove surface 11b;
the first groove surface 11a is arranged to be inclined downwards and outwards, and a direction of facing is perpendicular to the groove surface;
the second groove surface 11b is arranged to be inclined upwards and outwards; and the cliff sensor 2 is assembled on the first groove surface 11a.

Therefore, both the first groove surface 11a and the second groove surface 11b are arranged in an inclined manner, such that a gradually widening space is formed, thereby facilitating emission and reception of detection signals by the cliff sensors 2.

Of course, the number of the cliff sensors 2 is not limited to three, that is, a plurality of the cliff sensors 2 can be arranged as needed, and the cliff sensors 2 can be added at different directions and locations to improve the detection range and accuracy.

The cliff sensors 2 are TOF laser ranging sensors.

The TOF laser ranging sensor measures a distance according to flight time of a laser pulse, and calculates a distance from a target object according to a phase difference between light emission and reflection; and the TOF laser ranging sensor detects an object not according to its reflectivity only, and color or surface characteristics of the object have a relatively small impact on detection results.

A general infrared or laser sensor measures a distance from a target object usually according to an amount of light reflected from a surface of the target object. The color and surface roughness of the object will significantly affect the amount of light reflected, thereby affecting accuracy.

Therefore, the TOF laser ranging sensor is capable of accurately detecting various objects and applies to a wide range of application scenarios.

Each of the cliff sensors 2 includes a transmitting unit 21 and a receiving unit 22, where the receiving unit 22 may be provided with a light filter.

The light filter is configured for filtering rays beyond a specific wavelength range, to ensure that only light within an operating wavelength range of a sensor can be received by the sensor. This is crucial for reducing interference of ambient light (especially sunlight or other strong light sources) on measurement results.

For example, the operating wavelength of the cliff sensors 2 is around 850 nanometers, and the light filter allows light of this wavelength to pass through while blocking light of other wavelengths, thereby reducing interference and improving the detection accuracy and reliability.

An edge-detecting method or steps of the robot include:
The robot performs cleaning along a pre-set walking route. In this process, the transmitting units 21 of the cliff sensors 2 at the front end and on the left side and the right side of the side wall transmit detection signals, and the receiving units 22 receive reflected signals. A processing chip 23 calculates the phase difference between transmitted and reflected signals to determine the edge-detecting distance H. When the edge-detecting distance H is less than a preset value, e.g., when H is set as 3 cm and the horizontal distance between the body 1 and the cliff is less than 3 cm, light beams of transmitted signals are transmitted to outside of the cliff, and a measured distance from the object increases (which is different from previous values, abnormal). In this case, the cliff sensors 2 transmit an alarm signal about existence of a cliff, and the robot executes a corresponding action to avoid the cliff so as to prevent falling.

The cliff sensors 2 with the TOF laser technology are used to detect steps, obstacles and the like in addition to cliffs.

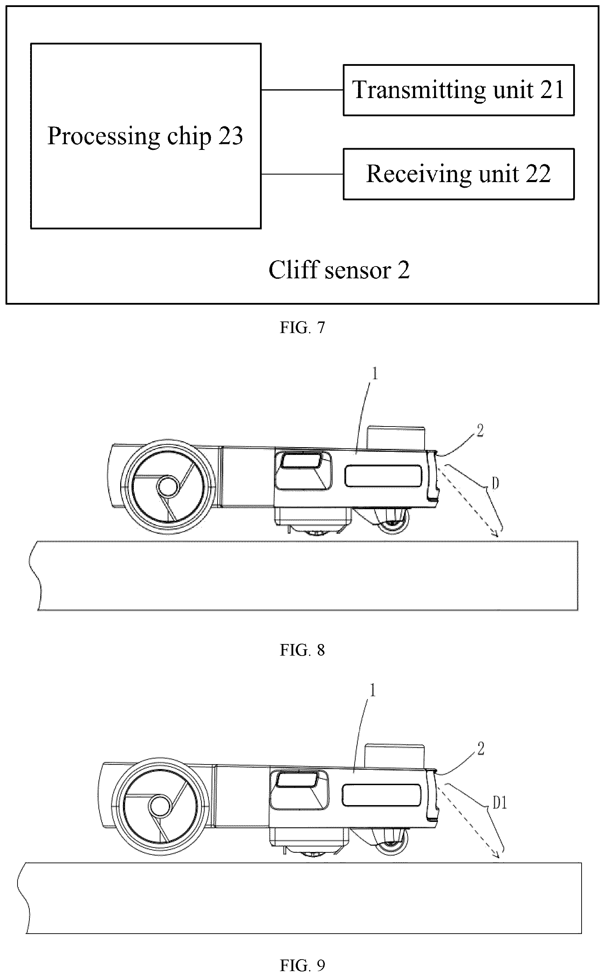

With reference to FIG. 8, for example, after the cliff sensors 2 are assembled, when H is set as around 3 cm, a vertical distance between the cliff sensors 2 and a surface of an object to be cleaned is determined, and a detection distance D from the cliff sensors 2 to the surface of the object to be cleaned is about 85 mm, the distance D can be calculated according to measurement results or a Pythagorean theorem.

With reference to FIG. 9, when data D1 detected by the cliff sensors 2 ranges from 80 mm to 90 mm, it can be determined that the cleaning robot is walking on a relatively flat surface.

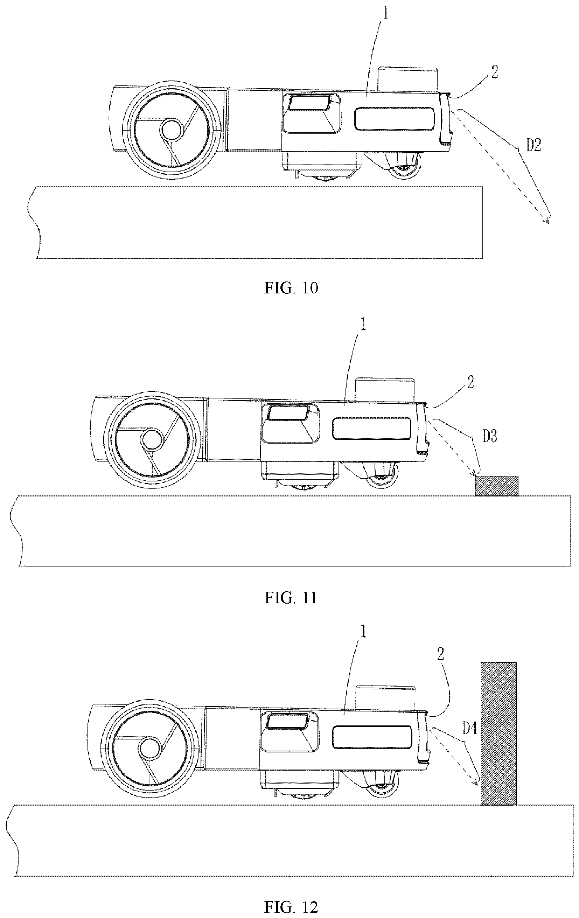

With reference to FIG. 10, when data D2 detected by the cliff sensors 2 is greater than 90 mm, it can be determined that there is a cliff in a walking direction. In this case, the action such as stopping, u-turn, corner turning or the like can be executed, to change or re-plan the walking route so as to prevent falling.

When the data detected by the cliff sensors 2 is less than 80 mm, it can be determined that there may be any step, obstacle or the like in the walking direction.

With reference to FIG. 11, when data D3 detected by the cliff sensors 2 is less than 60 mm or between 50 mm and 60 mm, it can be determined that there may be any step in the walking direction. In this case, the action such as stopping, u-turn, corner turning or the like can be executed, to change or re-plan the walking route, or a chassis of the robot can be raised to cross the step, which only applies to a case where the step is not high.

With reference to FIG. 12, when data D4 detected by the cliff sensors 2 is less than 40 mm or between 30 mm and 40 mm, it can be determined that there may be any obstacle in the walking direction. In this case, the action such as stopping, u-turn, corner turning or the like can be executed, to change or re-plan the walking route, so as to avoid the obstacle.

Therefore, the cliff sensors 2 with the TOF laser technology are capable of detecting cliffs, steps, obstacles and the like, and the cliff sensors 2 with the TOF laser technology have various detection functions, such that types, quantities and costs of sensors can be reduced.

The robot can be applied in scenarios with high platforms, cliffs and the like, such as floors with steps, beds, sofas, tabletops, carpets, and the like.

The robot is capable of performing cleaning, mite removal, sterilization, and other actions for beds and sofas. In this case, the robot functions as a mite removal device, and is capable of automatically walking on a bed or a sofa to perform the cleaning, mite removal, sterilization, and other actions. Surfaces of beds and sofas are made of fabric, and their light reflectivity is low, such that it difficult to accurately detect their edges through a general infrared or laser sensor. Moreover, the edges of beds and sofas are mostly curved or gradually inclined, and surfaces of beds and sofas may be uneven and wrinkled somewhat. When sensors are assembled at the bottom of the body 1, the detection range would be limited, which easily leads to misjudgments. Therefore, the cliff sensors 2 of the present invention detect based on the working principle of TOF laser ranging, are arranged at the top of the side wall 10 of the body 1, and are capable of detecting the edges of beds and sofas in an effective, timely and accurate manner, and are more suitable for cleaning them.

The above are merely some embodiments of the present invention. For those of ordinary skill in the art, they may also make several modifications and improvements on the premise of not deviating from the inventive concept of the present invention, and these modifications and improvements shall fall within the scope of protection of the present invention.

## Claims

1. A cleaning robot, **characterized by** comprising a body (1) and cliff sensors (2);
the cliff sensors (2) are arranged on a side wall (10) of the body (1) along a walking route in the front, on the left and on the right;
the cliff sensors (2) are arranged to be inclined downwards and outwards, and are capable of transmitting detection signals in an inclined and outward manner; and
an inclination angle (θ) of the cliff sensors (2) ranges between 20° and 70°.

2. The cleaning robot according to claim 1, **characterized in that** when an edge-detecting distance (H) between the body (1) and a cliff is less than a preset value, the robot executes an action to avoid the cliff; and
the preset value ranges from 1 cm to 20 cm.

3. The cleaning robot according to claim 2, **characterized in that** the cliff sensors (2) are embedded into a top of the side wall (10).

4. The cleaning robot according to claim 3, **characterized in that** grooves (11) are formed at a front end and on a left side and a right side of the side wall (10), and the cliff sensors (2) are assembled in the grooves (11).

5. The cleaning robot according to claim 4, **characterized in that** each of the grooves (11) is provided with a first groove surface (11a) and a second groove surface (11b);
the first groove surface (11a) is arranged to be inclined downwards and outwards;
the second groove surface (11b) is arranged to be inclined upwards and outwards; and
the cliff sensor (2) is assembled on the first groove surface (11a).

6. The cleaning robot according to claim 1, **characterized in that** the cliff sensors (2) are time of flight (TOF) laser ranging sensors.

7. The cleaning robot according to claim 6, **characterized in that** the cliff sensors (2) are capable of detecting steps.

8. The cleaning robot according to claim 7, **characterized in that** when data detected by the cliff sensors (2) ranges between 50 mm and 60 mm, it can be determined that there may be any step in a walking direction, and in this case, an action to re-plan the walking route or cross the step will be executed.

9. The cleaning robot according to claim 6, **characterized in that** the cliff sensors (2) are capable of detecting obstacles.

10. The cleaning robot according to claim 9, **characterized in that** when data detected by the cliff sensors (2) ranges between 30 mm and 40 mm, it can be determined that there may be any obstacle in the walking direction, and in this case, the action to re-plan the walking route will be executed.

## Amended claims

### Amended claims in accordance with Rule 137(2) EPC.

1. A cleaning robot, **characterized by** comprising a body (1) and cliff sensors (2);
the cliff sensors (2) are arranged on a side wall (10) of the body (1) along a walking route in the front, on the left and on the right;
the cliff sensors (2) are arranged to be inclined downwards and outwards, and are capable of transmitting detection signals in an inclined and outward manner; and
an inclination angle (θ) of the cliff sensors (2) ranges between 20° and 70°;
when an edge-detecting distance (H) between the body (1) and a cliff is less than a preset value, the robot executes an action to avoid the cliff; and
the preset value ranges from 1 cm to 20 cm;
the cliff sensors (2) are embedded into a top of the side wall (10);
grooves (11) are formed at a front end and on a left side and a right side of the side wall (10), and the cliff sensors (2) are assembled in the grooves (11);
**characterized in that** each of the grooves (11) is provided with a first groove surface (11a) and a second groove surface (11b);
the first groove surface (11a) is arranged to be inclined downwards and outwards;
the second groove surface (11b) is arranged to be inclined upwards and outwards; and
the cliff sensor (2) is assembled on the first groove surface (11a).
